# EUROPÄISCHE PATENTSCHRIFT

(11) **EP 3 497 410 B1**
(45) Veröffentlichungstag und Bekanntmachung des Hinweises auf die Patenterteilung: **20.04.2022**
(21) Anmeldenummer: 17745690.2
(22) Anmeldetag: 20.07.2017
(51) Int. Cl.: G01F 1/684, G01K 17/10

(54) **SENSOR FÜR EIN THERMISCHES DURCHFLUSSMESSGERÄT, EIN THERMISCHES DURCHFLUSSMESSGERÄT UND EIN VERFAHREN ZUM HERSTELLEN EINES SENSORS EINES THERMISCHEN DURCHFLUSSMESSGERÄTS**
SENSOR FOR A THERMAL FLOWMETER, THERMAL FLOWMETER, AND METHOD FOR PRODUCING A SENSOR OF A THERMAL FLOWMETER
CAPTEUR POUR DÉBITMÈTRE THERMIQUE, DÉBITMÈTRE THERMIQUE ET PROCÉDÉ DE FABRICATION D'UN CAPTEUR D'UN DÉBITMÈTRE THERMIQUE

(30) Priorität: 11.08.2016 DE 102016114963
(43) Veröffentlichungstag der Anmeldung: 19.06.2019
(73) Patentinhaber: Endress+Hauser Flowtec AG, 4153 Reinach (CH)
(72) Erfinder: SCHULTHEIS, Hanno, 3274 Hermrigen (CH); GRÜN, Alexander, 79539 Lörrach (DE); GABERTHÜEL, Stephan, 4104 Oberwil (CH)
(74) Vertreter: Andres, Angelika Maria
(86) Internationale Anmeldenummer: PCT/EP2017/068367
(87) Internationale Veröffentlichungsnummer: WO 2018/028966

(56) Entgegenhaltungen:
- EP-A1- 2 455 725
- US-A1- 2011 041 597
- Thomas Herboth: "Gesinterte Silber-Verbindungsschichten unter thermomechanischer Beanspruchung Dissertation zur Erlangung des Doktorgrades der Technischen Fakultät der Albert-Ludwigs-Universität Freiburg im Breisgau", , 2015, XP055413624, Gefunden im Internet: URL:http://d-nb.info/1119452511/34 [gefunden am 2017-10-10]

## Beschreibung

Die Erfindung betrifft einen Sensor für ein thermisches Durchflussmessgerät, ein thermisches Durchflussmessgerät mit einem erfindungsgemäßen Sensor und ein Verfahren zum Herstellen eines erfindungsgemäßen Sensors eines thermischen Durchflussmessgeräts.

Thermische Durchflussmessgeräte werden seit langen dazu verwendet, den Massedurchfluss eines Mediums durch eine Rohrleitung zu bestimmen. Dabei greifen solche Geräte im Wesentlichen auf zwei Messprinzipien zurück.

Bei einem ersten Messprinzip wird ein Sensor im durch die Rohrleitung strömenden Medium derart beheizt, dass seine Temperatur konstant bleibt. Unter Voraussetzung gleichbleibender Medieneigenschaften wie Temperatur, Dichte oder Zusammensetzung lässt sich über den zum Halten der Temperatur notwendigen Heizstrom auf den Massedurchfluss des Mediums schließen. Bei variabler Medientemperatur bietet sich an, einen zweiten Sensor zur Temperaturmessung des Mediums zu verwenden.

Bei einem zweiten Messprinzip wird das strömende Medium mit einer konstanten Heizleistung beheizt und die Temperatur des Mediums stromabwärts gemessen. Ein höherer Massedurchfluss führt zu einer geringeren Messtemperatur und umgekehrt. Auch hier kann ein Sensor zur Temperaturüberwachung des Mediums sinnvoll sein. Bei den beheizten Sensoren ist eine reproduzierbare Fertigung wichtig um eine hohe Messgenauigkeit zu erreichen. Variiert die Lotschichtdicke von Sensor zu Sensor, so variiert auch der benötigte Heizstrom. Damit die Durchflussmessung korrekt funktioniert, ist es zwingend notwendig, dass die Temperaturanpassung zwischen Sensor und Medium schnell funktioniert und dass Schwankungen hinsichtlich dieser Größe zwischen einzelnen Sensoren möglichst gering ausfallen.

Ein typischer Sensor weist dabei einen Sensorbecher auf, in welchem ein Sensorelement angeordnet ist und per Lotschicht mit dem Sensorbecher thermisch gekoppelt ist. Hierbei ist eine gleichmäßige Dicke der Lotschicht zwischen Sensorbecher und Sensorelement erwünscht, um eine hohe Messgenauigkeit zu erreichen. Aus dem technischen Bereich des Lötens sind Lösungen bekannt, welche zu einer geringen Lotschichtdickenschwankung führen, jedoch nicht in zufriedenstellendem Ausmaß oder auf eine für Sensoren eines thermischen Durchflussmessgeräts unvorteilhafte Art und Weise. So zeigt die Patentschrift US4626478 einen Gegenstand mit Auswölbungen, welche einen Abstand zwischen dem Gegenstand und einem Substrat sicherstellen. Es ist jedoch sehr aufwendig, ein Sensorelement mit solchen Auswölbungen zu versehen. Die noch unveröffentlichte Patentanmeldung DE102016111701.3 umgeht dieses Problem durch Prägen eines Sensorbecherbodens dergestalt, dass die Prägungen einen definierten Abstand des Sensorelements zu einer zum Sensorelement gerichteten Seite des Sensorbecherbodens herstellen. Das Prägen des Sensorbechers ist allerdings mit großem Aufwand verbunden und geht mit Verschleiß des dazu verwendeten Prägestempels einher.

Die Patentanmeldung EP 2 455 725 A1 is auch ein Beispiel für den Stand der Technik, der einen Sensorbecher mit einem Sensorelement offenbart.

Aufgabe der Erfindung ist es daher, einen Sensor für ein thermisches Durchflussmessgerät, ein thermisches Durchflussmessgerät und ein Verfahren zum Herstellen eines Sensors eines thermischen Durchflussmessgeräts vorzuschlagen, wobei der Abstand des Sensorelements zum Sensorbecher sichergestellt wird, ohne das Sensorelement oder den Sensorbecher aufwendig bearbeiten zu müssen.

Diese Aufgabe wird gelöst durch einen erfindungsgemäßen Sensor gemäß dem unabhängigen Anspruch 1 sowie ein thermisches Durchflussmessgerät gemäß dem unabhängigen Anspruch 10 und ein Verfahren zur Herstellung eines erfindungsgemäßen Sensors gemäß Anspruch 11.

Der erfindungsgemäße Sensor für ein thermisches Durchflussmessgerät umfasst:
einen Sensorbecher, wobei der Sensorbecher eine erste Längsachse und eine Mantelfläche sowie ein offenes Ende und ein geschlossenes zweites Ende mit einem Becherboden aufweist, wobei die erste Längsachse das erste Ende und das zweite Ende insbesondere senkrecht schneidet, und wobei eine in Richtung des ersten Endes gerichtete Bodenfläche des Becherbodens im Wesentlichen eben ist;
und mindestens ein Sensorelement, wobei das Sensorelement im Sensorbecher im Bereich des Becherbodens angeordnet ist;
und eine Lotschicht, welche dazu eingerichtet ist, das Sensorelement mit dem Becherboden thermisch zu verbinden,
wobei das Sensorelement durch mindestens drei Abstandshalter definiert gegenüber der Bodenfläche positioniert ist, und wobei die mindestens drei Abstandshalter eine ausgehärtete Sinterpaste aufweisen, und wobei die Abstandshalter ein Vieleck mit einer Eckenzahl entsprechend ihrer Anzahl aufspannen.

In einer Ausgestaltung des Sensors sind die Abstandshalter dazu eingerichtet, einen konstanten Abstand zwischen der Bodenfläche und dem Sensorelement sicherzustellen.

In einer Ausgestaltung des Sensors weist jeder der Abstandshalter eine Kontaktfläche auf, welche Kontaktfläche insbesondere eine ringförmige, mehreckige oder kreuzförmige Struktur bildet.

In einer Ausgestaltung des Sensors weisen die Abstandshalter eine beabstandende Höhe von höchstens 200 µm und insbesondere höchstens 150 µm und bevorzugt höchstens 100 µm auf.

In einer Ausgestaltung des Sensors weisen die Abstandshalter eine beabstandende Höhe mindestens 20 µm und insbesondere mindestens 50 µm und bevorzugt mindestens 70 µm auf.

In einer Ausgestaltung des Sensors weist der Sensorbecher im Bereich des Becherbodens eine Wandstärke von höchstens 1.2 mm und insbesondere höchstens 1 mm und bevorzugt höchstens 0.8 mm auf.

In einer Ausgestaltung des Sensors weist der Sensorbecher im Bereich des Becherbodens eine Wandstärke von mindestens 0.1 mm und mindestens 0.2 mm und bevorzugt mindestens 0.4 mm auf.

In einer Ausgestaltung des Sensors ist die Sinterpaste dazu eingerichtet, während des Aushärtens höchstens 20%, und insbesondere höchstens 15% und bevorzugt höchstens 13% eines Volumens vor dem Aushärten zu verringern. Insbesondere findet die Verringerung des Volumens definiert statt, so dass alle am Sensorbecher angebrachten Abstandshalter gleichmäßig schrumpfen.

Das erfindungsgemäße thermische Durchflussmessgerät zur Messung des Massedurchflusses eines Mediums in einem Messrohr mit mindestens einem erfindungsgemäßen Sensor umfasst:
ein Messrohr mit einer zweiten Längsachse;
mindestens einen Sensor, welcher in das Messrohr eingelassen ist;
und eine elektronische Betriebsschaltung, welche dazu eingerichtet ist, den mindestens einen Sensor zu betreiben,

In einer Ausgestaltung des Durchflussmessgeräts umfasst das thermische Durchflussmessgerät mindestens zwei Sensoren,
wobei die elektronische Betriebsschaltung dazu eingerichtet ist, mindestens einen ersten Sensor zu beheizen,
wobei die elektronische Betriebsschaltung dazu eingerichtet ist, die Temperatur des Mediums mittels mindestens eines zweiten Sensors zu bestimmen,

Das erfindungsgemäße Verfahren zur Herstellung eines erfindungsgemäßen Sensors für ein thermisches Durchflussmessgerät zur Messung des Massedurchflusses eines Mediums in einem Messrohr weist dabei folgende Verfahrensschritte auf:
Anbringen der Abstandhalter auf einer einem Becherboden zuzuwendenden Seite eines Sensorelements, wobei die Abstandshalter eine aushärtbare Sinterpaste sind, und Aushärten der Abstandshalter;
Aufbringen einer Lotschicht auf dem Becherboden;
Schmelzen der Lotschicht und Andrücken des Sensorelements mit den Abstandshaltern gegen den Becherboden, wobei das Aushärten der Abstandshalter ein Erhitzen des Sensorelements mit den Abstandshaltern auf mindestens 20 °C und insbesondere mindestens 50 °C und bevorzugt mindestens 100 °C oberhalb der Schmelztemperatur des Lotmaterials umfasst.

In einer Ausgestaltung des Verfahrens geschieht das Anbringen der Abstandshalter mittels einer Schablone, welche auf der dem Becherboden zuzuwendenden Seite des Sensorelements angelegt wird, wobei die Schablone mindestens ein Loch aufweist, in welches Loch die Sinterpaste eingebracht wird, wobei die Füllmenge der Sinterpaste in dem Loch durch Rakeln eingestellt wird.

In einer Ausgestaltung des Verfahrens ist die Schablone zumindest im Bereich des Lochs elektropoliert, so dass die Sinterpaste bei Entfernen der Schablone von der dem Becherboden zuzuwendenden Seite des Sensorelements an der Seite des Sensorelements verbleibt.

Es werden also durch die vorliegende Erfindung ein Sensor eines thermischen Durchflussmessgeräts, ein thermisches Durchflussmessgerät und ein Verfahren zur Herstellung eines Sensors eines thermischen Durchflussmessgeräts zur Messung des Massedurchflusses eines Mediums in einem Messrohr vorgeschlagen.

Im Folgenden wird die Erfindung anhand von Ausführungsbeispielen erläutert.
Fig. 1 zeigt eine schematische Darstellung des Sensors anhand der Abbildungen 1.1 und 1.2, wobei Abbildung 1.1 eine schematische räumliche Darstellung auf einen längs geschnittenen Sensorbecher eines erfindungsgemäßen Sensors und Abbildung 1.2 einen Längsschnitt durch einen erfindungsgemäßen Sensor zeigt.
Fig. 2 zeigt eine schematische Darstellung eines Sensorelements anhand der Abbildungen 2.1 und 2.2, wobei Abbildung 2.1 eine Aufsicht auf das Sensorelement mit daran angebrachten Abstandshaltern zeigt, und wobei Abbildung 2.2 eine Seitenansicht auf ein Sensorelement mit daran angebrachten Abstandshaltern zeigt.
Fig. 3 zeigt einen schematischen Querschnitt durch ein erfindungsgemäßes thermisches Durchflussmessgerät.
Fig. 4 zeigt einen schematischen Verfahrensablauf zum Herstellen eines erfindungsgemäßen Sensors.

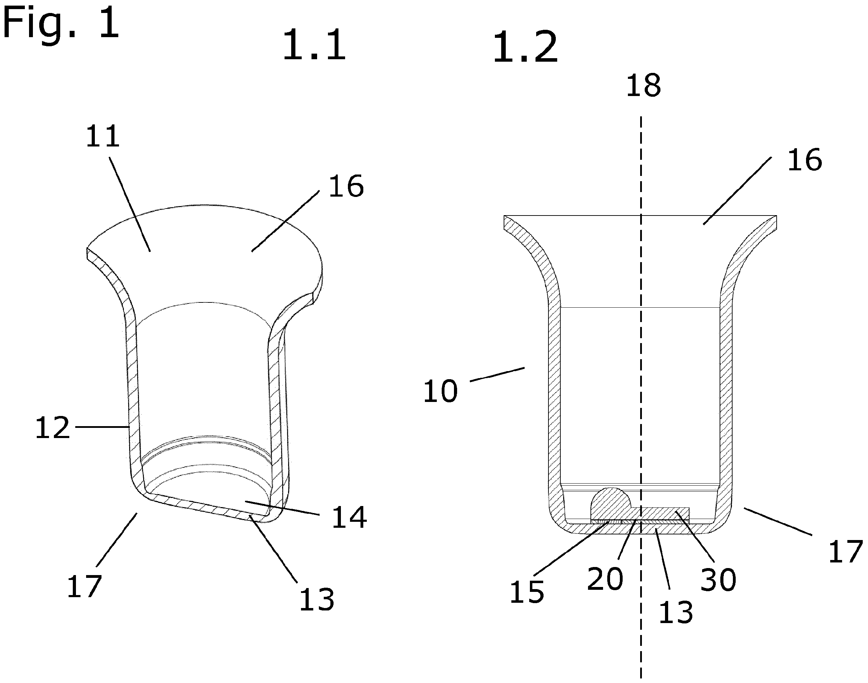

Fig. 1.1 und 1.2 zeigen einen Sensorbecher 11 mit einer Mantelfläche 12, einem Becherboden 13 und einer Bodenfläche 14. Der Sensorbecher ist unter Nichtberücksichtigung von Vorsprüngen im Wesentlichen rotationssymmetrisch bezüglich einer ersten Längsachse 18.
Fig. 1.2 zeigt einen Sensor 10, wobei im Sensorbecher 11 ein Sensorelement 30 angeordnet ist, welches über eine Lotschicht 20 thermisch mit dem Becherboden 13 verbunden ist. Die durch die Abstandshalter 15 definierte Positionierung, insbesondere der gleichmäßige Abstand des Sensorelements 30 zum Becherboden 13 sorgt für einen gleichmäßigen Temperaturübergang mit geringen Schwankungen zwischen verschiedenen Sensoren.

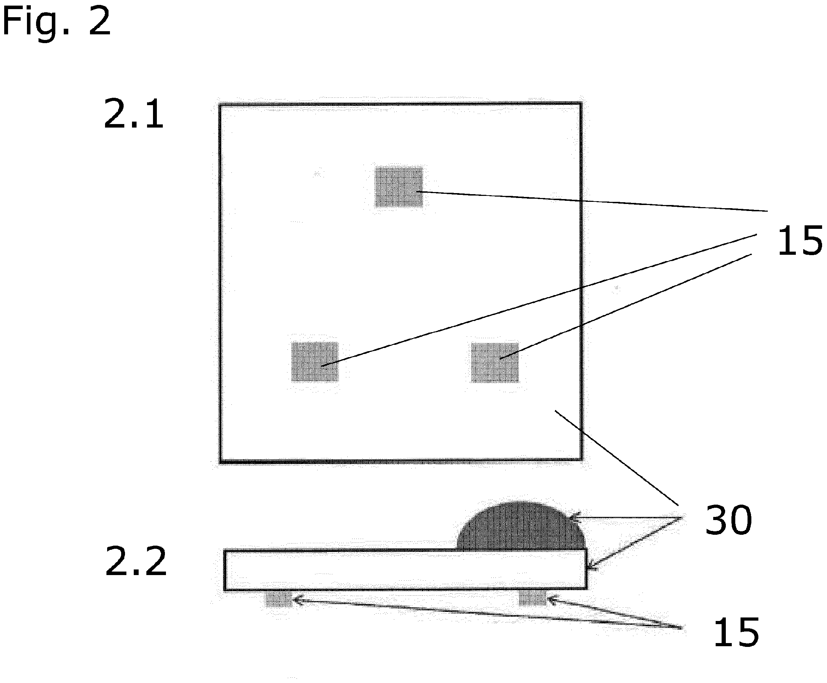

Fig. 2 zeigt ein Sensorelement 30 mit drei an einer dem Becherboden 13 zuzuwendenden Seite des Sensorelements angebrachten Abstandshaltern 15. Die Abstandshalter 15 können beispielsweise mit Hilfe einer an die dem Becherboden 13 zuzuwendende Seite des Sensorelements 30 angelegte Schablone mit mindestens einer Öffnungen angebracht werden, wobei eine aushärtbare Sinterpaste in die mindestens eine Öffnung eingebracht wird. Durch Rakeln kann dabei sichergestellt werden, dass eine dem Becherboden 13 zuzuwendende Seite der aushärtbaren Sinterpaste glatt mit der Schablone abschließt. Somit ist eine ausreichende Genauigkeit der beabstandenden Höhe der Abstandshalter 15 sichergestellt.

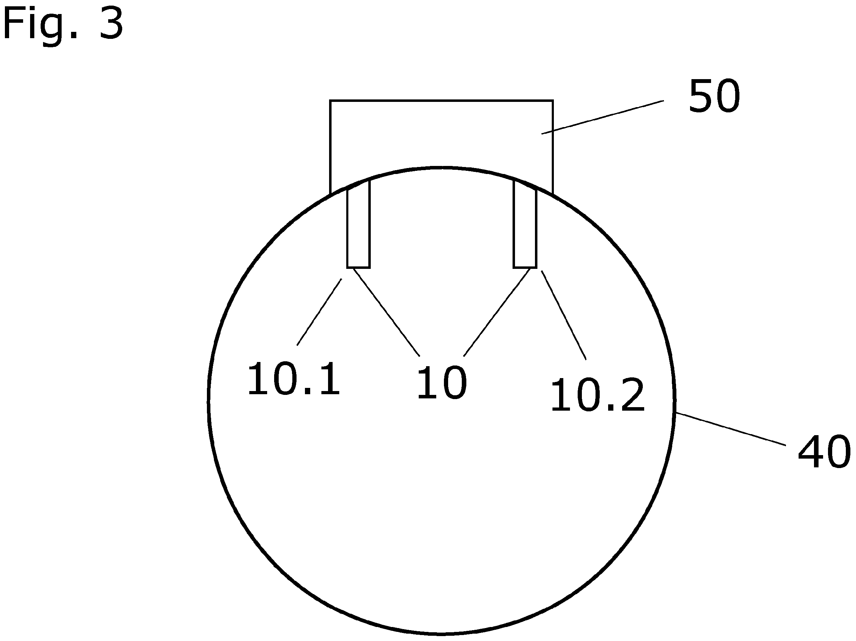

Fig. 3 zeigt einen schematischen Querschnitt durch ein erfindungsgemäßes thermisches Durchflussmessgerät mit einem Messrohr 40, zwei erfindungsgemäßen Sensoren 10, welche im Lumen des Messrohrs 40 angeordnet sind, und einer elektronischen Betriebsschaltung 50, welche dazu eingerichtet ist, die Sensoren zu betreiben.

Um den Massedurchfluss eines Mediums durch das Messrohr 40 zu messen, wird beispielsweise ein erster Sensor 10.1 im durch das Messrohr 40 strömenden Medium derart beheizt, dass eine Temperaturdifferenz gegenüber der Medientemperatur konstant bleibt. Es bietet sich an, einen zweiten Sensor 10.2 zur Temperaturmessung des Mediums zu verwenden, welcher vor oder wie in Fig. 2 gezeigt neben dem beheizten Sensor 10.1 angeordnet ist, um die Temperaturdifferenz zu halten. Unter Voraussetzung gleichbleibender Medieneigenschaften wie Dichte oder Zusammensetzung lässt sich über den zum Halten der Temperatur notwendigen Heizstrom auf den Massedurchfluss des Mediums schließen.

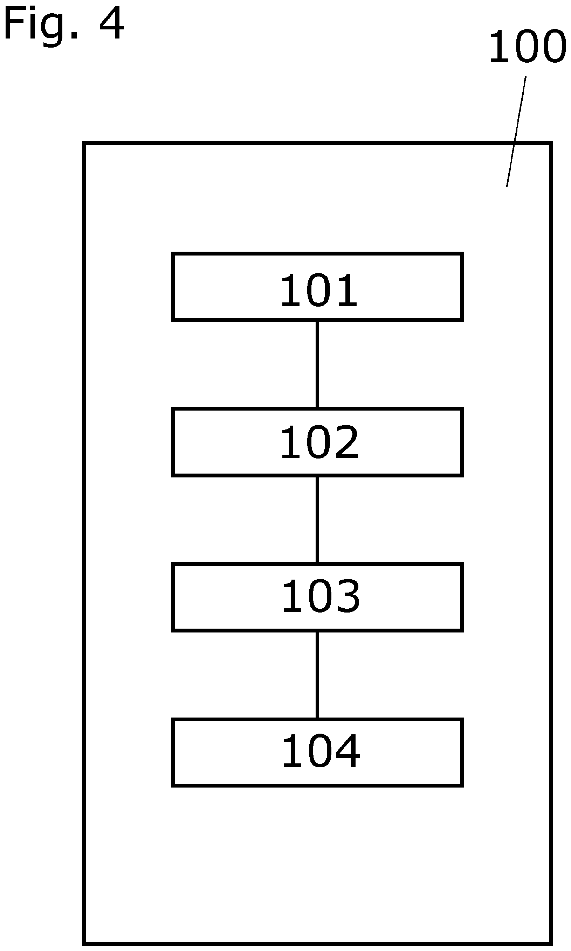

Fig. 4 zeigt den Ablauf eines erfindungsgemäßen Verfahrens 100 zum Herstellen eines erfindungsgemäßen Sensors 10.

In einem ersten Verfahrensschritt 101 werden die Abstandhalter 15 auf einer einem Becherboden 13 zuzuwendenden Seite eines Sensorelements 30 angebracht, wobei die Abstandshalter 15 eine aushärtbare Sinterpaste sind;

In einem zweiten Verfahrensschritt 101 werden die Abstandshalter 15 ausgehärtet.

In einem dritten Verfahrensschritt 103 wird die Lotschicht 20 auf dem Becherboden 13 aufgebracht;

In einem vierten Verfahrensschritt 104 wird die Lotschicht 20 geschmolzen und das mindestens eine Sensorelement 30 mit den Abstandshaltern gegen den Becherboden 13 gedrückt;

Bei nachfolgendem Abkühlen der Lotschicht 20 unter deren Schmelzpunkt behält das Sensorelement 30 einen festen Abstand zum Becherboden 13 bei und ist mit diesem über die Lotschicht 20 thermisch verbunden.

### Bezugszeichenliste

- 10: Sensor
- 10.1: Beheizter erster Sensor
- 10.2: zweiter Sensor zur Temperaturmessung
- 11: Sensorbecher
- 12: Mantelfläche
- 13: Becherboden
- 14: Bodenfläche
- 15: Abstandshalter
- 16: Offenes erstes Ende
- 17: Geschlossenes zweites Ende
- 18: Erste Längsachse
- 20: Lotschicht
- 30: Sensorelement
- 40: Messrohr
- 50: Elektronische Betriebsschaltung

## Patentansprüche

1. Sensor (10) für ein thermisches Durchflussmessgerät, umfassend:
Einen Sensorbecher (11), wobei der Sensorbecher eine erste Längsachse (18) und eine Mantelfläche (12) sowie ein offenes erstes Ende (16) und ein geschlossenes zweites Ende (17) mit einem Becherboden (13) aufweist, wobei die erste Längsachse (18) das erste Ende und das zweite Ende insbesondere senkrecht schneidet, und wobei eine in Richtung des ersten Endes gerichtete Bodenfläche (14) des Becherbodens (13) im Wesentlichen eben ist;
und mindestens ein Sensorelement (30), wobei das Sensorelement im Sensorbecher (11) im Bereich des Becherbodens (13) angeordnet ist;
und eine Lotschicht (20), welche dazu eingerichtet ist, das Sensorelement (30) mit dem Becherboden (13) thermisch zu verbinden,
**dadurch gekennzeichnet,**
**dass** das Sensorelement (30) durch mindestens drei Abstandshalter (15) definiert gegenüber der Bodenfläche (14) positioniert ist,
wobei die mindestens drei Abstandshalter (15) eine ausgehärtete Sinterpaste aufweisen, und wobei die mindestens drei Abstandshalter (15) ein Vieleck mit einer Eckenzahl entsprechend ihrer Anzahl aufspannen.

2. Sensor nach Anspruch 1, wobei die Abstandshalter (15) dazu eingerichtet sind, einen konstanten Abstand zwischen der Bodenfläche (14) und dem Sensorelement (30) sicherzustellen.

3. Sensor nach Anspruch 1 oder 2,
wobei jeder der Abstandshalter (15) eine Kontaktfläche aufweist, welche Kontaktfläche insbesondere eine ringförmige, mehreckige oder kreuzförmige Struktur bildet.

4. Sensor nach mindestens einem der vorigen Ansprüche,
wobei die Abstandshalter (15) eine beabstandende Höhe von höchstens 200 µm und insbesondere höchstens 150 µm und bevorzugt höchstens 100 µm aufweisen.

5. Sensor nach mindestens einem der vorigen Ansprüche,
wobei die Abstandshalter (15) eine beabstandende Höhe mindestens 20 µm und insbesondere mindestens 50 µm und bevorzugt mindestens 70 µm aufweisen.

6. Sensor nach mindestens einem der vorigen Ansprüche,
wobei der Sensorbecher (11) im Bereich des Becherbodens (13) eine Wandstärke von höchstens 1.2 mm und insbesondere höchstens 1 mm und bevorzugt höchstens 0.8 mm aufweist.

7. Sensor nach mindestens einem der vorigen Ansprüche,
wobei der Sensorbecher (11) im Bereich des Becherbodens (13) eine Wandstärke von mindestens 0.1 mm und mindestens 0.2 mm und bevorzugt mindestens 0.4 mm aufweist.

8. Sensor nach mindestens einem der vorigen Ansprüche,
wobei die Sinterpaste dazu eingerichtet ist, während des Aushärtens höchstens 20%, und insbesondere höchstens 15% und bevorzugt höchstens 13% eines Volumens vor dem Aushärten zu verringern.

9. Thermisches Durchflussmessgerät zur Messung des Massedurchflusses eines Mediums in einem Messrohr mit mindestens einem erfindungsgemäßen Sensor nach einem der vorigen Ansprüche,
wobei das thermische Durchflussmessgerät umfasst:
ein Messrohr (40) mit einer zweiten Längsachse;
mindestens einen Sensor (10), welcher in das Messrohr (40) eingelassen ist; eine elektronische Betriebsschaltung (50), welche dazu eingerichtet ist, den mindestens einen Sensor zu betreiben,

10. Durchflussmessgerät nach Anspruch 9,
wobei das thermische Durchflussmessgerät mindestens zwei Sensoren (10) umfasst,
wobei die elektronische Betriebsschaltung (50) dazu eingerichtet ist, mindestens einen ersten Sensor (10.1) zu beheizen,
wobei die elektronische Betriebsschaltung (50) dazu eingerichtet ist, die Temperatur des Mediums mittels mindestens eines zweiten Sensors (10.2) zu bestimmen,

11. Verfahren zur Herstellung eines Sensors nach einem der vorigen Ansprüche 1 bis 8 für ein thermisches Durchflussmessgerät zur Messung des Massedurchflusses eines Mediums in einem Messrohr , wobei das Verfahren folgende Verfahrensschritte aufweist:
Anbringen der Abstandhalter auf einer einem Becherboden zuzuwendenden Seite eines Sensorelements, wobei die Abstandshalter eine aushärtbare Sinterpaste sind, und Aushärten der Abstandshalter;
Aufbringen einer Lotschicht auf dem Becherboden;
Schmelzen der Lotschicht und Andrücken des Sensorelements mit den Abstandshaltern gegen den Becherboden, wobei das Aushärten der Abstandshalter (15) ein Erhitzen des Sensorelements (30) mit den Abstandshaltern auf mindestens 20 °C und insbesondere mindestens 50 °C und bevorzugt mindestens 100 °C oberhalb der Schmelztemperatur des Lotmaterials umfasst.

12. Verfahren nach Anspruch 11,
wobei das Anbringen der Abstandshalter (15) mittels einer Schablone geschieht, welche auf einer dem Becherboden (13) zuzuwendenden Seite des Sensorelements (30) angelegt wird, wobei die Schablone mindestens ein Loch aufweist, in welches Loch die Sinterpaste eingebracht wird, wobei die Füllmenge der Sinterpaste in dem Loch durch Rakeln eingestellt wird.

13. Verfahren nach Anspruch 12,
wobei die Schablone zumindest im Bereich des Lochs elektropoliert ist, so dass die Sinterpaste beim Entfernen der Schablone von der dem Becherboden zuzuwendenden Seite des Sensorelements an der Seite des Sensorelements verbleibt.

## Claims

1. Sensor (1) for a thermal flowmeter, said sensor comprising:
a sensor pot (11), wherein the sensor pot has a first longitudinal axis (18) and a lateral surface (12) as well as an open first end (16) and a closed second end (17) with a pot bottom (13), wherein the first longitudinal axis (18) intersects the first end and the second end, particularly perpendicularly, and wherein a bottom surface (14) of the pot bottom (13), oriented in the direction of the first end, is essentially planar;
and at least a sensor element (30), wherein the sensor element is arranged in the sensor pot (11) in the area of the pot bottom (13);
and a solder layer (20), which is designed to thermally connect the sensor element (30) to the pot bottom (13),
**characterized in that**
the sensor element (30) is positioned in a defined manner in relation to the bottom surface (14) by at least three spacers (15),
wherein the at least three spacers (15) feature a hardened sinter paste,
and wherein the at least three spacers (15) define a polygon with a number of corners corresponding to the number of spacers.

2. Sensor as claimed in Claim 1,
wherein the spacers (15) are designed to ensure a constant distance between the bottom surface (14) and the sensor element (30).

3. Sensor as claimed in Claim 1 or 2,
wherein each of the spacers (15) has a contact surface, said contact surface particularly forming an annular, polygon or cruciform structure.

4. Sensor as claimed in at least one of the previous claims,
wherein the spacers (15) have a distancing height of 200 µm at maximum and particularly of 150 µm at maximum and preferably of 100 µm at maximum.

5. Sensor as claimed in at least one of the previous claims,
wherein the spacers (15) have a distancing height of at least 20 µm and particularly of at least 50 µm and preferably of at least 70 µm.

6. Sensor as claimed in at least one of the previous claims,
wherein, in the area of the pot bottom (13), the sensor pot (11) has a wall thickness of 1.2 mm at maximum and particularly of 1 mm at maximum and preferably of 0.8 mm at maximum.

7. Sensor as claimed in at least one of the previous claims,
wherein, in the area of the pot bottom (13), the sensor pot (11) has a wall thickness of at least 0.1 mm and particularly of at least 0.2 mm and preferably of at least 0.4 mm.

8. Sensor as claimed in at least one of the previous claims,
wherein, during the hardening, the sinter paste is designed to reduce at most 20 %, and particularly at most 15 % and preferably at most 13 % of a volume before the hardening.

9. Thermal flowmeter designed to measure the mass flow of a medium in a measuring tube with at least a sensor according to the invention as claimed in one of the previous claims,
said thermal flowmeter comprising:
a measuring tube (40) with a second longitudinal axis;
at least a sensor (10), which is embedded in the measuring tube (40);
an electronic operating circuit (50), which is designed to operate the at least one sensor.

10. Flowmeter as claimed in Claim 9,
wherein the thermal flowmeter comprises at least two sensors (10),
wherein the electronic operating circuit (50) is designed to heat at least a first sensor (10.1),
wherein the electronic operating circuit (50) is designed to determine the temperature of the medium using at least a second sensor (10.2).

11. Procedure for the manufacture of a sensor as claimed in one of the previous Claims 1 to 8 for a thermal flowmeter designed to measure the mass flow of a medium in a measuring tube,
wherein said procedure comprises the following steps:
Installation of the spacers on a side of a sensor element to face towards a pot bottom, wherein said spacers are a sinter paste that can harden, and hardening of said spacers;
Application of a solder layer on the pot bottom;
Melting of the solder layer and pressing of the sensor element with the spacers against the pot bottom,
wherein the hardening of the spacers (15) comprises the heating of the sensor element (30) with the spacers to at least 20 °C and particularly to at least 50 °C and preferably to at least 100 °C above the melting temperature of the solder material.

12. Procedure as claimed in Claim 11,
wherein the spacers (15) are fitted using a stencil which is applied to a side of the sensor element (30) to face towards the pot bottom (13), wherein the stencil has at least one hole in which the sinter paste is introduced, wherein the amount of sinter paste in the hole is regulated using a scraper.

13. Procedure as claimed in Claim 12,
wherein the stencil is electropolished at least in the area of the hole such that when the stencil is removed from the side of the sensor element to face towards the pot bottom, the sinter paste remains on the side of the sensor element.

## Revendications

1. Capteur (1) pour un débitmètre thermique, lequel capteur comprend :
un pot de capteur (11), le pot de capteur présentant un premier axe longitudinal (18) et une surface d'enveloppe (12) ainsi qu'une première extrémité ouverte (16) et une deuxième extrémité fermée (17) avec un fond de pot (13), le premier axe longitudinal (18) coupant la première extrémité et la deuxième extrémité,
notamment perpendiculairement, et une surface de fond (14) du fond de pot (13), orientée en direction de la première extrémité, étant pour l'essentiel plane ;
et au moins un élément capteur (30), l'élément capteur étant disposé dans le pot de capteur (11) dans la zone du fond de pot (13) ;
et une couche de soudure (20), laquelle est conçue pour relier thermiquement l'élément capteur (30) au fond de pot (13),
**caractérisé**
**en ce que** l'élément capteur (30) est positionné de manière définie par rapport à la surface de fond (14) par au moins trois entretoises (15),
les au moins trois entretoises (15) comprenant une pâte de frittage durcie,
et les au moins trois entretoises (15) définissant un polygone avec un nombre de sommets correspondant à leur nombre.

2. Capteur selon la revendication 1,
pour lequel les entretoises (15) sont conçues pour assurer une distance constante entre la surface de fond (14) et l'élément capteur (30).

3. Capteur selon la revendication 1 ou 2,
pour lequel chacune des entretoises (15) présente une surface de contact, laquelle surface de contact forme notamment une structure annulaire, polygonale ou cruciforme.

4. Capteur selon au moins l'une des revendications précédentes,
pour lequel les entretoises (15) présentent une hauteur d'espacement de 200 µm au maximum et notamment de 150 µm au maximum et de préférence de 100 µm au maximum.

5. Capteur selon au moins l'une des revendications précédentes,
pour lequel les entretoises (15) présentent une hauteur d'espacement d'au moins 20 µm et notamment d'au moins 50 µm et de préférence d'au moins 70 µm.

6. Capteur selon au moins l'une des revendications précédentes,
pour lequel le pot de capteur (11) présente dans la zone du fond de pot (13) une épaisseur de paroi de 1,2 mm au maximum et notamment de 1 mm au maximum et de préférence de 0,8 mm au maximum.

7. Capteur selon au moins l'une des revendications précédentes,
pour lequel le pot de capteur (11) présente, dans la zone du fond de pot (13), une épaisseur de paroi d'au moins 0,1 mm et notamment d'au moins 0,2 mm et de préférence d'au moins 0,4 mm.

8. Capteur selon au moins l'une des revendications précédentes,
pour lequel la pâte de frittage est adaptée pour réduire, pendant le durcissement,
au plus 20 %, et notamment au plus 15 % et de préférence au plus 13 % d'un volume avant le durcissement.

9. Débitmètre thermique destiné à la mesure du débit massique d'un produit dans un tube de mesure avec au moins un capteur conforme à l'invention selon l'une des revendications précédentes,
le débitmètre thermique comprenant :
un tube de mesure (40) présentant un deuxième axe longitudinal ;
au moins un capteur (10), lequel est incorporé dans le tube de mesure (40) ;
un circuit électronique d'exploitation (50), lequel est conçu pour exploiter l'au moins un capteur.

10. Débitmètre selon la revendication 9,
pour lequel le débitmètre thermique comprend au moins deux capteurs (10),
le circuit électronique d'exploitation (50) étant conçu pour chauffer au moins un premier capteur (10.1),
le circuit électronique d'exploitation (50) étant conçu pour déterminer la température du produit au moyen d'au moins un deuxième capteur (10.2).

11. Procédé destiné à la fabrication d'un capteur selon l'une des revendications 1 à 8 précédentes pour un débitmètre thermique destiné à la mesure du débit massique d'un produit dans un tube de mesure,
lequel procédé comprend les étapes suivantes :
Installation des entretoises sur un côté d'un élément capteur faisant face à un fond de pot, lesdites entretoises étant constituées d'une pâte frittée durcissable,
et durcissement desdites entretoises ;
Application d'une couche de soudure sur le fond du pot ;
Fusion de la couche de soudure et pression de l'élément capteur avec les entretoises contre le fond du pot,
le durcissement des entretoises (15) comprenant un échauffement de l'élément capteur (30) avec les entretoises à au moins 20 °C et notamment à au moins 50 °C et de préférence à au moins 100 °C au-dessus de la température de fusion du matériau de soudage.

12. Procédé selon la revendication 11,
pour lequel la mise en place des entretoises (15) s'effectue au moyen d'un gabarit, lequel gabarit est appliqué sur un côté de l'élément capteur (30) tourné vers le fond du pot (13), le gabarit présentant au moins un trou dans lequel la pâte de frittage est introduite, la quantité de remplissage de la pâte de frittage dans le trou étant réglée par raclage.

13. Procédé selon la revendication 12,
pour lequel le gabarit est électropoli au moins dans la zone du trou, de sorte que lorsque le gabarit est retiré du côté de l'élément capteur faisant face au fond du pot, la pâte de frittage reste sur le côté de l'élément capteur.
